# EUROPEAN PATENT APPLICATION

(11) **EP 4 502 556 A1**
(43) Date of publication of application: **05.02.2025**
(21) Application number: 24192543.7
(22) Date of filing: 02.08.2024
(51) Int. Cl.: G01F 11/02, G01F 11/04, G01F 15/00, B65B 3/32

(54) **DISPENSER**

(30) Priority: 03.08.2023 BE 202305648
(71) Applicant: BelCoPhar BV, 2920 Kalmthout (BE)
(72) Inventor: ROMBOUTS, Gunther, 2920 Kalmthout (BE)
(74) Representative: Brantsandpatents bv

(57) **Abstract**

The current invention relates to a dispenser for dispensing a metered dose of a liquid, preferably a viscous liquid, wherein said liquid is provided in a container such as bag or bag-in-box, wherein said container is in a fluid-connection with a supply port of a valve; and wherein said valve is furthermore in fluid-connection with a glass cylindrical barrel via an outlet port of said valve, said cylindrical barrel having a piston with piston rod, wherein the wall thickness of the glass cylinder is between 3 to 10 mm.

## Description

### FIELD OF THE INVENTION

The present invention relates to a dispenser for dispensing a metered dose of a liquid. The dispenser is particularly suited to dispense viscous liquids, such as cosmetic creams or serums. This invention is more particularly related to a dispenser designed to address the shortcomings of prior art dispensers, such as lack of robustness, inability to be cleaned, lack of antibacterial properties, and unsuitability for long-term multiple use.

### BACKGROUND

The cosmetic and pharmaceutical industry generates a large amount of disposable packaging, which is seldom re-used. Nonetheless, also this industry is seeking to reduce the amount of packaging, and plastics used. To this end, dispensers are designed that allow for refilling of packages, by dispensing a metered dose of said preferred cream.

Current dispensers, such as those described in US9637258, provide systems for dispensing measured amounts of substances, including viscous liquids. However, these systems often fail to provide adequate uniformity and precision. In addition, the currently described dispensers fail to provide adequate strength and longevity or durability for repeated use, particularly in commercial settings such as pharmacies or drug stores where the dispensers may be used continuously throughout the day. Additionally, many of these dispensers pose a risk of contamination due to flaws in the design or inadequate choices of material. Often they are not designed to be easily cleaned, thereby exacerbating the issue of potential contamination and decreasing the longevity of the dispenser.

The invention thereto aims to provide a solution to at least some of the problems mentioned above.

### SUMMARY OF THE INVENTION

The present invention and embodiments thereof serve to provide a solution to one or more of the above-mentioned disadvantages. To this end, the present invention relates to a dispenser according to claim 1 and its use according to claim 12. The dispenser as described herein is particularly useful for dispensing a metered dose of viscous liquids such as creams. As such the dispenser can be used in pharmacies, perfumiers and department stores for dispensing a pre-defined volume of a product of choice. The dispenser as disclosed herein can be used for various sorts of liquids and dosages, can be re-used multiple times, can withstand high pressure and can dispense a liquid with high precision and dosage uniformity. It can be easily demounted, cleaned and sterilized and its design is optimized such that bacterial growth is minimized. The dispenser allows eco-friendly reuse of existing liquid packaging such as cosmetic packaging. Clients can return to the store with their empty packages and obtain a refill of their product of choice. Hence, the dispenser can also be used as a refill station.

Preferred embodiments of the device are shown in any of the claims 2 to 11.

In a second aspect, the present invention relates to a method according to claim 14.

### DESCRIPTION OF FIGURES

**Figure 1** **and** **2** show a detail of an embodiment of a dispenser according to the current invention, having 4 valves each connected to a cylindrical barrel.
**Figure 3** shows an embodiment of a cylindrical barrel of a dispenser according to the current invention.
**Figure 4** shows a (re)fill station according to an embodiment of the current invention.

### DETAILED DESCRIPTION OF THE INVENTION

The present invention concerns a dispenser for dispensing a metered dose of a liquid such as a cosmetic cream or serum. The dispenser of the current application is particularly useful as a refill station in shops and pharmacies.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Disclosed herein is a dispenser for dispensing a metered dose of a liquid wherein said liquid is provided in a container, wherein said container is coupled in a fluid-connection to a supply port of a valve via a tubing; and wherein said valve is furthermore in fluid-connection with a glass cylindrical barrel via a tubing, via an outlet port of said valve, said glass cylindrical barrel having a piston with a piston rod.

In an embodiment, the wall thickness of the glass cylinder is between 3 to 10 mm, more between 4 and 7 mm, more preferably between 4 and 6 mm, such as 5 mm.

In an embodiment, the glass cylindrical barrel has an internal volume of at least 400 ml, preferably between 450 ml and 750 ml, more preferably between 500 and 600 ml.

The design of the dispenser as described herein has been optimized to improve durability, multiple and longstanding use, and to minimise the risk of bacterial growth.

It was shown that a glass cylindrical barrel with a wall thickness as described herein provides the most optimal results in terms of durability, multiple use and prevention of contamination. In addition, the dispenser as described herein was able to dispense viscous liquids such as creams, lotions and emulsions. Indeed, glass was shown to have some properties not present in other materials. Its smooth surface for instance prevents unwanted bacterial growth. This is in stark contrast to barrels that are made of materials such as inox, which due to their way of production contains little grooves that accommodate leftovers of liquid and eventually microbial growth. Also, polymers such as plastics were seen to promote microbial growth, and in addition were not able to withstand large forces exerted on the barrels, especially when having to dispense very viscous liquids. Plastic barrels were found to lack adequate strength. The wall thickness of the barrel as described herein was optimized to prevent breakage when large amounts of pressure are exerted on the system. It was found that a wall thickness of less than 3 mm did not provide enough strength to the barrel. A thickness of more than 10 mm was inefficient because of production problems and costs. Glass also has the advantage that it is transparent and that thus the content of the barrel can be inspected. Finally, the parts of the dispenser used can be easily sterilised in a steriliser, without loss of function or quality.

In a preferred embodiment, borosilicate glass is used, more preferably borosilicate glass type 1.

The liquid is provided in a container, which is connected to the dispenser to allow a fluid path from the container to parts of the dispenser. The container can be any type of container suited to hold a liquid. In a preferred embodiment, the container is a bag, or a bag-in-box. These bags are typically made of foil or multilayer foil, and allow aseptical filling of a liquid in said bag. The bag may be fixed with one or more clamps on a rod adjustable in height. The bag is typically provided with a spout or knob, to allow discharge of the content of said bag to the exterior or in this case to a part of the dispenser. In an embodiment, the spout is a vitop^{®} pout. The spout or knob of the bag in the current invention is designed such that it allows coupling to the dispenser. To that end, a coupling device can be provided, which enables the coupling of the bag or the bag-in-box to the dispenser.

As mentioned, the liquid to be dispensed can be any type of liquid, such as preferably a viscous liquid such as an emulsion (a cream), a semi-solid emulsion of oil and water, a watery solution, a serum, a gel, a balm, a paste, an ointment, an oil, a lotion, etc. The dispenser as described herein is particularly useful to be used in the context of cosmetics and skincare.

Central in the dispenser are one or more valves, preferably diverter valves, more preferably a three-way valve. The valve as disclosed herein preferably comprises at least three ports, that allow connection to respectively the container, the cylindrical barrel and the discharge tap. In an embodiment, said valve comprises a supply port, a discharge port, and an outlet port.

The supply port allows coupling to the container with liquid, via a tubing. Via the supply port, a liquid path can be established that allows liquid flow from the container through the valve and the outlet port of the valve in the barrel. In an embodiment, the liquid flow between the container and the barrel via the liquid path, is driven by gravity. However, in other embodiments, a pump may be used for driving the flow of the liquid between the container and the barrel. The outlet port of the valve is coupled to the barrel via one or more tubings and/or connectors and a discharge spout present at said barrel. A liquid path can be created, starting from inside the barrel to the discharge port and discharge tap. This allows discharging a metered volume of said liquid in a receptacle provided by a user.

Such receptacles can be any type of receptacle used in the art, especially those suited to be used in the context of cosmetics and pharmaceutical products. Non-limited examples of receptacles are jars, tubes, bags, sticks, droppers, or bottles.

The closure of the ports of the valve may be controlled by any suitable means known in the art. In some embodiments, the valve is pneumatically or hydraulically actuated. In a preferred embodiment, said valve is a solenoid valve.

The cylindrical barrel is provided with a piston system for allowing the discharge of a metered dose of the liquid, once inside the barrel. In an embodiment, the piston head has a conical design. This has as advantage that when very viscous liquids are being dispensed, the movement of the piston is not hampered. Viscous liquids tend to act as glues for surfaces and can hamper the functioning of the piston inside the barrel. The piston head further comprises grooves fitted with one or more sealing rings. In a preferred embodiment, said sealing rings are X rings. The X-rings or Quad-rings, possessing a unique shape that resembles the letter "X" when viewed in cross-section, have an increased surface area for contact with the barrel which provides enhanced sealing capabilities. The taut seal prevents the fluid from flowing back. Additionally, the X-rings have increased surface area and flexibility allowing them to conform to the barrel wall more closely and ensuring that all of the liquid is scraped away.

In an embodiment, the cylindrical barrel comprises at one end a discharge spout that allows connection to the valve, preferably by one or more tubing. In a further embodiment, said discharge spout comprises barbs, that allow for a good connection to the tubing, and prevents release of the tubing when subjected to a force or pressure.

The piston moves into the barrel pushing the liquid out of the barrel through the discharge spout into the liquid path between the barrel and the discharge tap. The movement of the piston may be driven by an actuator such as but not limited to a hydraulic or pneumatic motor or cylinder. The movement of the piston is preferably driven by a linear motor.

A preferred embodiment of the dispenser according to the current invention is as follows. A housing encompasses the dispenser, which comprises at least one three-way valve, having three ports. The supply port of the valve is in fluid connection with a container such as a bag or bag-in-box (bib), filled with a liquid of choice, such as a cosmetic cream, via tubing. The bag is suspended by means of a clamp or hook in the upper part of the housing. Via the tubing and the valve, the liquid content of the bag is guided, by gravity force or by suction employing a pump, to a cylindrical glass barrel that is connected via a discharge spout and tubing to the outlet port of the valve. The barrel is supported by a support plate, holding the barrel in place. Sufficient space is provided to allow movement of the piston rod up and down the system. In the design, the discharge spout of the barrel is facing upwards, towards the valve and the liquid container. The barrel contains a piston, for discharging a metered dose of the liquid in the barrel towards the discharge port and thereon connected discharge tap. To this end, the piston, preferably driven by an actuator, will move upwards in the barrel, resulting in a metered dose of the liquid in the barrel being pushed through the discharge spout, towards the discharge port of the valve. The discharge port is connected to a discharge spout which is visible and extends from the exterior of the dispenser housing. Control of the dispenser occurs by means of a controller present in the housing, which allows the user to choose the desired liquid (in case multiple containers are present) as well as the preferred dose. To that end, the housing can comprise a display that allows a user to provide instructions. The dispenser and housing further comprise suited support plates, frames, and bars, to provide rigidness and stability to the system. In an embodiment, the housing can be wheeled.

In a further embodiment of the current invention, the dispenser comprises multiple valves, each valve being connected to a cylindrical barrel and connectable to a liquid container via valve ports. As such, the dispenser can comprise 2, 3, 4, 5, 6, 7 up to 10 or between 2 and 10 valves with their respective barrel and connectable to a liquid container. This allows for dispensing multiple types of liquids by one dispenser, as well as different doses.

In some embodiments, the plurality of pistons corresponding to the plurality of barrels are all driven by the same actuator. In such an embodiment, the pistons move simultaneously discharging liquid at the same time through the discharge tap.

In other embodiments, the plurality of pistons corresponding to the plurality of barrels, are driven by independent actuators. In such embodiments, independent discharging of the liquid through the tap is achieved, allowing the dispensation through a single discharge tap at a time.

In a further preferred embodiment, said dispenser comprises an even number of valves with their respective barrel and liquid container. An even number may help in providing sufficient stability to the whole dispenser. In a preferred embodiment, said dispenser comprises 4 valves, each valve being connected to a cylindrical barrel and connectable to a liquid container.

As already discussed above, the dispenser may be encompassed in a housing for aesthetic reasons as well as to secure the dispenser and to prevent damage or misuse. Said housing preferably at least partially encompasses part of the dispenser. The housing may have transparent parts to allow the user to have a view of the internal working mechanism. For instance, parts of the barrel(s) can be shown to the user. In an embodiment, the housing may comprise a display, allowing the user to pass on instructions (eg choice of liquid and amount). External parts of the dispenser such as the discharge taps will obviously also be reachable for the user.

The current invention also covers a fill or refill station comprising one or more dispensers as described herein and one or more containers holding a liquid, for allowing the discharge of a dose of said liquid into a receptacle. Equally, the current invention covers a method for filling or refilling a receptacle with a liquid, such as a cosmetic cream or serum, by means of a dispenser according to any of the previous embodiments, or a fill or refill station as described herein. The method comprises the steps of receiving instructions from a user concerning the liquid to be dispensed and the amount of said requested liquid and dispensing a metered dose of said liquid into said receptacle.

The present invention will be now described in more detail, referring to figures that are not limitative.

### DESCRIPTION OF FIGURES

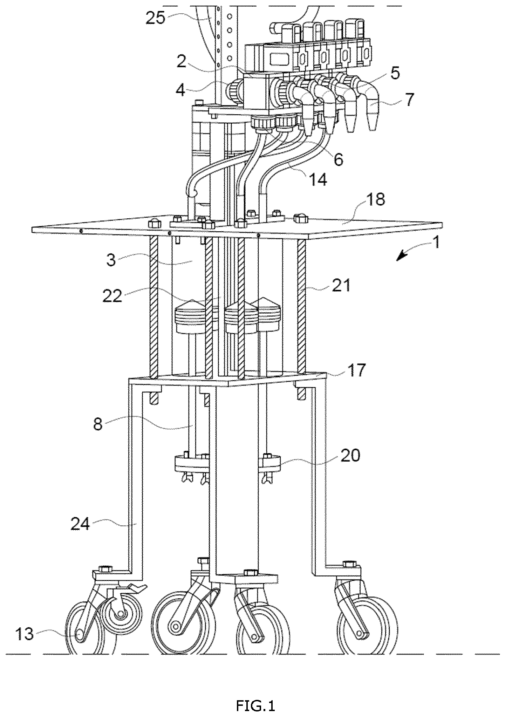

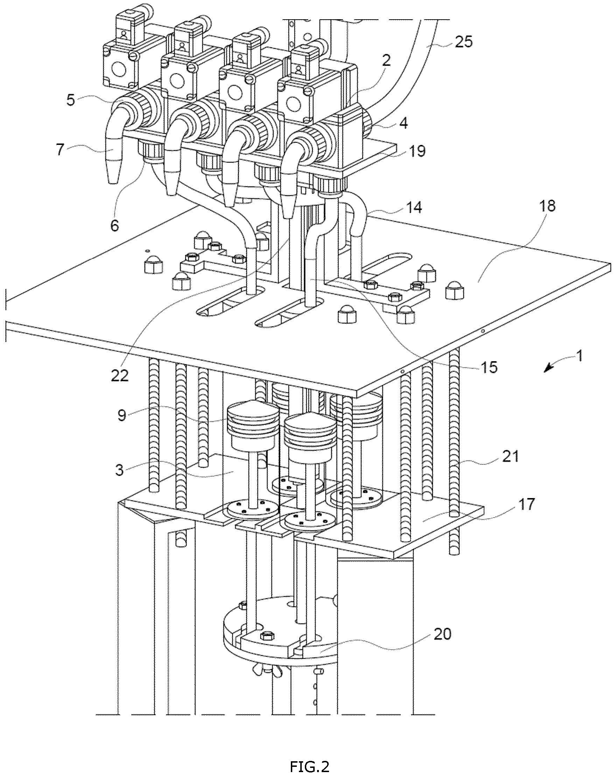

FIG. 1 and 2 show an embodiment of a dispenser (1) as described herein, having 4 valves (2) connected to respectively 4 barrels (3). Each of the valves (2) has 3 ports, namely a supply port (4), a discharge port (5) and an outlet port (6). The supply port (4) of the valve (2) is in fluid connection with a container such as a bag or bag-in-box (not shown), filled with a liquid of choice, such as a cosmetic cream, via tubing (24). The bag is preferably suspended by means of a clamp or hook in the upper part of the dispenser (1). The outlet port (6) of the valve (2) is coupled to the barrel (3) via tubing (14) and a discharge spout (15) present at said barrel (3). The discharge port (5) of the valve (2) is connected to a discharge tap (7).

A first liquid path is created, starting from the bag to the supply port (4) of the valve (2). A second liquid path is created between the outlet port (6) of the valve and the barrel (3). The liquid contained in the bag is guided, preferably by gravity force, via the first liquid path, to the valve and from the valve, via the second liquid path, to the barrel (2). In alternative embodiments, a suction pump is employed to drive the movement of the liquid from the bag to the barrel. The second liquid path between the barrel (3) and the outlet port (6) brings back liquid from the barrel to the valve (2) and allows discharging via the discharge port (5) and discharge tap (7) of a metered volume of said liquid in a receptacle provided by a user. A solenoid is responsible for regulating the closure of the valve's ports.

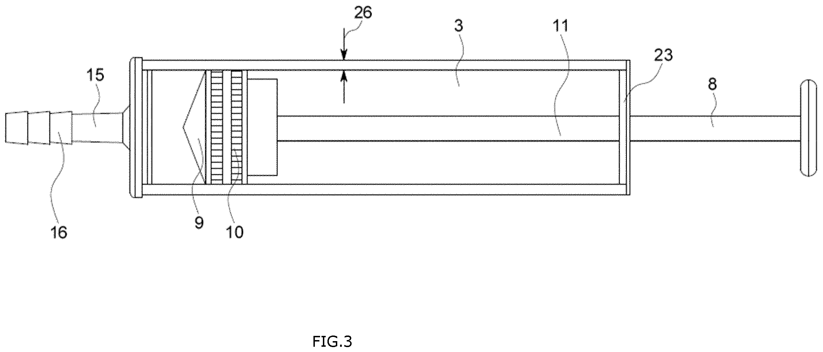

As shown in FIG. 3, the barrel (3) has glass walls with a thickness (26) of between 3 and 10 mm. Further, said barrel contains a piston (8), for discharging a metered dose of the liquid from the barrel. The piston (8) comprises an elongated part, the piston rod (11). A conical piston head (9) is positioned at the end of the piston rod (8) situated inside the barrel (3). The piston head (9) further comprises grooves fitted with sealing X rings (10). In alternative embodiments, the piston head is fitted with other types of rings, such as O-rings. Nonetheless, X-rings are particularly effective in aiding the scraping of the liquid from the walls of the barrel.

The barrel (3) further comprises at one end, a discharge spout (15) which further comprises barbs (16), that allow for a good connection of the discharge spout (15) to the tubing (14), and prevent the release of the tubing (14) when subjected to a force or pressure. The piston is also foreseen with a seal (23) that fits the end of the barrel (3) opposite to the discharge spout (15), which prevents the leaking of the liquid inside or contaminations from the outside.

Coming back to FIG. 1 and 2, the piston (18) is able to move into the barrel upwards (3) resulting in a metered dose of the liquid in the barrel being pushed through the discharge spout (15) into the second liquid path existent between the barrel and the valve (2) and further via the discharge port (5) to the discharge tap (7) into the receptacle. The movement of the piston is driven by an actuator such as but not limited to a linear motor. In the embodiment of FIG. 1 and 2, all the 4 pistons move together, as they are fixed to the same plate (20) and are driven by a singular actuator. Nonetheless, in alternative embodiments (not shown), each piston may be actuated by an independent motor, causing the pistons to move independently and thus to discharge metered doses of liquids independently.

The barrel (3) is supported by a support plate (17), holding the barrel in place. Sufficient space is provided to allow movement of the piston rod (11) up and down the system. In the design, the discharge spout (15) of the barrel is facing upwards, towards the valve (2) and the liquid container. The dispenser comprises suited support plates (18, 19, 20), bars (22), rods (21) and frames (23) to provide rigidness and stability to the system.

The dispenser may be provided with a controller and a display that allows a user to provide instructions for the controller. In some embodiments, the display is connected to the controller.

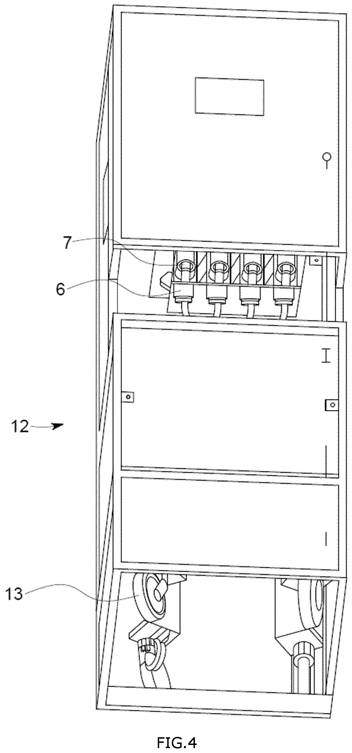

As shown in FIG. 4, the dispenser (1) is encompassed in a housing (12), for protection and aesthetic reasons. The discharge taps (7) are visible and extend from the exterior of the dispenser housing (12). In some embodiments, the housing is provided with wheels (13) which ease the transportation of the dispenser.

The present invention is in no way limited to the embodiments described and/or shown in the figures. On the contrary, the present invention may be realized in many different ways without departing from the scope of the invention. While the figures depict a dispenser with 4 valves and barrels, it will for instance be obvious that similar embodiments with 1, 2, 3, etc. valves and cylinders are equally within the scope of the current invention.

### Figure features

1: dispenser
2: valve
3: barrel
4: valve supply port
5: valve discharge port
6: valve outlet port
7: discharge tap
8: piston
9: piston head
10: sealing X ring
11: piston rod
12: housing
13: wheels
14: tubing (between the barrel and the valve)
15: discharge spout
16: spout barbs
17, 18, 19, 20: support plates
21: rods
22: bar
23: seal
24: frames
25: tubing (between the bag and the valve)
26: wall thickness

## Claims

1. A dispenser (1) for dispensing a metered dose of a liquid, preferably a viscous liquid, wherein said liquid is provided in a container such as bag or bag-in-box, wherein said container is in a fluid-connection with a supply port (4) of a valve (2); and wherein said valve is furthermore in fluid-connection with a glass cylindrical barrel (3) via an outlet port (6) of said valve, said cylindrical barrel having a piston (8) with a piston rod (11), wherein the wall thickness of the glass cylinder is between 3 to 10 mm.

2. The dispenser (1) according to claim 1, wherein said valve (2) comprises a discharge port (5), for discharging a metered volume of said liquid in a receptacle.

3. The dispenser (1) according to any of the previous claims, wherein the glass cylindrical barrel (3) has a wall thickness of between 4 and 7 mm, more preferably between 4 and 6 mm, such as 5 mm.

4. The dispenser (1) according to any of the previous claims, wherein the glass cylindrical barrel (3) has an internal volume of at least 400 ml, preferably between 450 ml and 750 ml, more preferably between 500 and 600 ml.

5. The dispenser (1) according to any of the previous claims, wherein the piston (8) has a piston head (9) that comprises one or more X-rings (10) for sealing.

6. The dispenser (1) according to claim 5 wherein said piston head (9) is conical.

7. The dispenser (1) according to any of the previous claims, wherein the glass cylindrical barrel (3) comprises a discharge spout (15), said discharge spout comprises barbs (16).

8. The dispenser (1) according to any of the previous claims, wherein said dispenser comprises an even number of valves (2), each valve being connected to a glass cylindrical barrel (3) and connectable to a liquid container.

9. The dispenser (1) according to any of the previous claims, wherein said dispenser comprises 4 valves (2), each valve being connected to a glass cylindrical barrel (3) and connectable with a liquid container and having a discharge port (5).

10. The dispenser (1) according to any of the previous claims, wherein said dispenser comprises one or more clamps for attaching a liquid container.

11. The dispenser (1) according to any of the previous claims, wherein said dispenser comprises a housing (12), which at least partially encompasses said one or more valve (2) and one or more glass cylindrical barrels (3).

12. Use of a dispenser according to any of the previous claims 1 to 11 for dispensing a metered dose of a liquid such as a cosmetic cream into a receptacle.

13. A fill or refill station comprising a dispenser (1) according to any of the claims 1 to 11 and one or more containers comprising a liquid, wherein a dose of said liquid is to be dispensed in a receptacle.

14. A method for filling or refilling a receptacle with a liquid, such as a cosmetic cream or serum, by means of a dispenser (1) according to any of the claims 1 to 11 or by means of a fill or refill station according to claim 13, said method comprises the steps of receiving instructions of a user concerning the liquid to be dispensed and the amount of said requested liquid and dispensing a metered dose of said liquid into said receptacle.
